# EUROPEAN PATENT SPECIFICATION

(11) **EP 1 125 470 B1**
(45) Date of publication and mention of the grant of the patent: **31.12.2008**
(21) Application number: 99971628.5
(22) Date of filing: 27.10.1999
(51) Int. Cl.: H04Q 11/04, H04L 29/06

(54) **DYNAMIC DSP ALLOCATION FOR UNIVERSAL ACCESS TO A PACKET NETWORK**
DYNAMISCHE DSP-ZUORDNUNG FÜR UNIVERSALZUGRIFF ZU EINEM PAKETNETZ
ATTRIBUTION DYNAMIQUE DE PROCESSEURS DE SIGNAUX NUMERIQUES EN VUE D'UN ACCES UNIVERSEL A UN RESEAU A COMMUTATION PAR PAQUETS

(30) Priority: 30.10.1998 US 106214 P; 15.10.1999 US 419673
(43) Date of publication of application: 22.08.2001
(73) Proprietor: Telogy Networks Inc., Germantown, MD 20874-1109 (US)
(72) Inventor: MORGAN, Edward, Gaithersburg, MD 20878 (US); WITOWSKY, William, Gaithersburg, MD 20878 (US); CRUPI, Joseph, North Potomac, MD 20878 (US)
(74) Representative: Holt, Michael
(86) International application number: PCT/US1999/025235
(87) International publication number: WO 2000/027164

(56) References cited:
- US-A- 5 142 528
- US-A- 5 497 373
- US-A- 5 546 453

## Description

### BACKGROUND OF THE INVENTION

### 1. Field of the Invention

The present invention relates generally to digital signal processors used for allocation of resources. More particularly, the present invention is a gateway that controls and allocates a single function for each digital signal processor in a flexible manner to implement a multi-function system for transmitting Time Division Multiplexed (TDM) telecommunications over a packet network.

### 2. Background Information

As telecommunication technology advances, the demand for cheaper, better, and more telecommunication services increases. In the past, separate telephone and facsimile lines were sufficient for a business. Today, separate telephone and facsimile lines are insufficient even for a residence. In today's society, businesses and residences need separate telephone, facsimile, and data lines just to keep up with technology.

Thus, as the demands for telecommunication services rise, so does the demand for more telecommunications lines. As society continues to become computer savvy, the demand for more telecommunication lines is becoming an increasing problem. In short, present day telecommunication demands are becoming harder to meet.

To meet some of society's needs, businesses and residences are turning to alternative telecommunication services, such as satellite services, instead of the traditional means, i.e., telephone lines. However, even these alternative telecommunication services are insufficient to meet society's needs. Telephone companies are running out of telephone numbers, modems are becoming outdated quicker than ever, and the demand for telecommunication services continues to rise with no end in sight.

One traditional way to improve telephone service has been through the use of Time Division Multiplexed (TDM) telephony networks. TDM is based on allocating a time slot for each channel connected to the system whether the user uses the allocated time slot or not. However, even with the improvements afforded by TDM technology, telephony systems are still expensive and cannot provide sufficient telecommunication services. As a result, there is a need to migrate from the traditional TDM telephony network towards a packet based network for carrying telecommunication information such as voice/fax/data information.

A packet system adds a header to the information payload to form an information packet, and sends the information packets to a desired location. The packets can vary in size or they may be a set size. If there is too much information to fit into one packet, the information is broken up into several packets with each packet having a header thereby allowing assembly into a coherent file later. At a minimum, the header indicates where the packet is being sent and the relative ordering of the packets. Once packets are received at the desired destination, the packets are then recombined in the proper order. Ideally, packet based systems are high density and low power.

The requirement to have high density and low power for the packet based network is complicated by the desire to have a flexible system that performs many different functions on a per channel basis. The goal is to have a system that can provide a wide variety of functions per channel. For instance, it is desirable to have a system that can be used with voice coders, fax modems, and data modems, as well as operating to accommodate different standards or versions.

The system uses a universal port to handle the different types of telecommunication information. In order to deliver the different telecommunication information, the universal port accommodates different functions on a per channel basis. To make such a system, digital signal processors (DSPs) are used for processing the different telecommunication information through multiple channels. One approach is the use of multi-function, multi-channel DSPs where all functions are available at any time on all DSP channels, i.e., all of the software for running the system is present on each DSP.

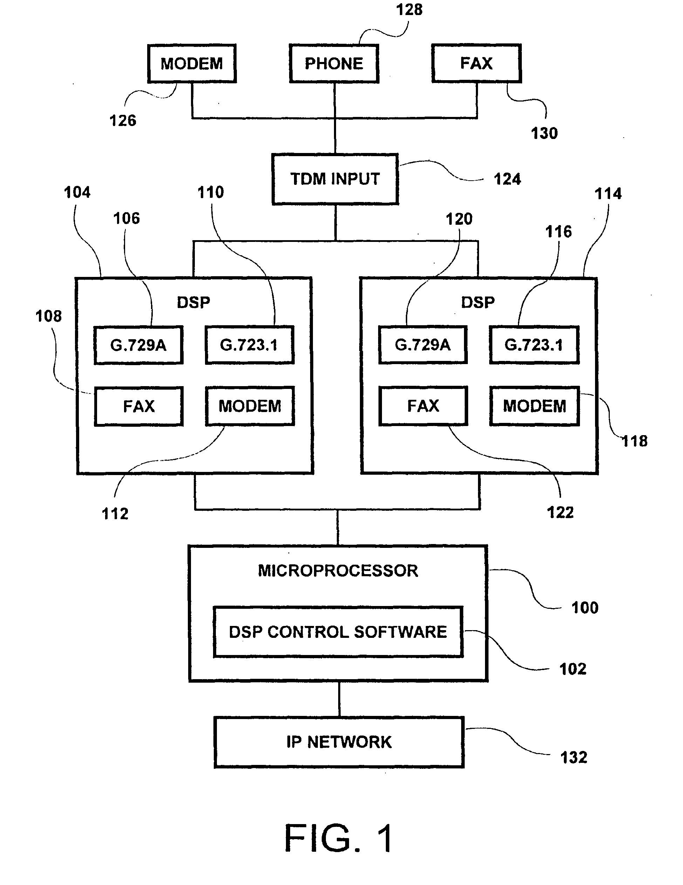

Referring to **Fig. 1****,** a multi-function, multi-channel DSP system architecture is illustrated. According to this approach a universal port is implemented having all functions available at all times on a given DSP. As illustrated, the microprocessor **100** contains DSP control software **102** that controls which DSP function is running at any particular time, with all of the functions being available at all times on the DSP. In this example, the DSP **104** can run functional software to handle G.729A voice compression/decompression **106,** fax traffic **108,** G.723.1 voice compression/decompression **110,** or modem traffic **112.** Similarly, the DSP **114** can run functional software to handle G.723.1 voice compression/decompression **116,** modem traffic **118,** G.729A voice compression/decompression **120,** or fax traffic **122.**

In operation, information to and from physical devices, such as a modem **126,** a telephone **128,** and fax machine **130,** pass through a TDM input **124** and the individual DSPs (**104, 114**) for processing. The TDM input **124** assigns times slots for each physical device. In this case, each physical device is assigned a time slot regardless of whether that physical device is in use or not.

The DSP control software 102 in microprocessor 100 determines which function each of the channels in each DSP will operate to process. For example, the DSP 104 can be running voice compression/decompression according to G.729A on channel 1, fax relaying on channels 2 and 3, and a V.90 Modem on channel 4. The processed information is passed to and from an Internet Protocol (IP) network 132. The IP network 132 may be a WAN or LAN type of IP network.

An advantage of this approach is that any channel within a DSP can be executing any of the configured algorithms. The disadvantage of this approach in DSP utilization is that it is expensive to have all of the algorithms available for use at all times on a large array of individual DSPs. This approach is also an inefficient use of both memory and power. the increased cost in terms of money, space, and power is a function of the product of the number of channels and the number of functions supported.

Therefore there is a need for a gateway that interfaces between traditional telephone equipment and a packet network, which processes and translates the telephone network information to packets, and which does so in an efficient manner.

US patent number 5,546,453 describes a programmable telecommunication switch which provides a user with the ability to define and assign on a port-by-port basis a desired signalling protocol for handling calls. US patent number 5,142,528 describes the use of a communication line which allows the determination of a communication protocol in a communication port prior to the communication, such as in an ISDN network, by dynamically linking a communication control program which corresponds to the determined communication protocol and initializing it to allow the dynamic selection of the communication protocol

US patent number 5,497,373 describes a multi-media interface for interfacing multi-media voice and data between various communication networks by making the necessary protocol conversions for different telecommunications protocols corresponding to various types of telecommunications media. A programmable line interface module and a time slot interchanger frame the received information and route the various time slots of information to multiple DSPs to perform various protocol conversions.

### SUMMARY OF THE INVENTIOM

The present invention is a gateway that allows packets to be sent over a TDM system. The gateway is a universal port that includes a plurality of DSPs that are controlled by software. The controlling software determines what single function the DSP will perform over multiple channels.

According to a first aspect, there is provided a telecommunications gateway for interfacing telecommunications traffic between a TDM network and a packet switched network. The telecommunications gateway includes a time slot interchanger, plural DSPs and a microprocessor controller. The time slot interchanger is connected to handle traffic from the TDM network. the plural DSPs are connected to handle TDM traffic routed according to allocation of time slots by the time slot interchanger. The plural DSPs convert TDM traffic into packets for transport via the packet switched network and converting packet traffic from the packet switched network for transport via the TDM network. The microprocessor operates according to software instructions to control operation of the DSPs. The microprocessor is adapted to download a respective software module to each of the plural DSPs to enable the DSPs to each handle telecommunications traffic according to a respective type of signalling protocol. All channels of each of the plural DSPs handle only telecommunications traffic corresponding to a single one of plural types of signalling protocols. The operation of allocating TDM traffic includes reallocating a call to a different one of the plurality of DSPs by re-routing the time slot assigned to said call.

According to a second aspect, there is provided a method of interfacing telecommunications traffic between a TDM network and a packet switched network. Actions according to the method correspond to the software driven operations discussed above.

### BRIEF DESCRIPTION OF THE DRAWINGS

The invention will be appreciated by review of the following detailed description, in conjunction with viewing of the appended drawing figures.
Fig. 1 illustrates a multi-function, multi-channel DSP system architecture.
Fig. 2 illustrates a single-function, multi-channel DSP system architecture according to an embodiment of the present invention.
Fig. 3 illustrates a cost analysis comparing a multi-function, multi-channel DSP system architecture with a single-function, multi-channel DSP system architecture.

### DETAILED DESCRIPTION OF THE INVENTION

The present invention is a gateway that allows packets to be sent over a TDM system. The gateway is a universal port that includes a plurality of DSPs that are controlled by software. The controlling software determines what single function the DSP will perform over multiple channels.

The DSPs for implementing a universal port gateway according to the present invention may be obtained commercially, for example, from Texas Instruments, Inc. (model nos. 5420 and 549).

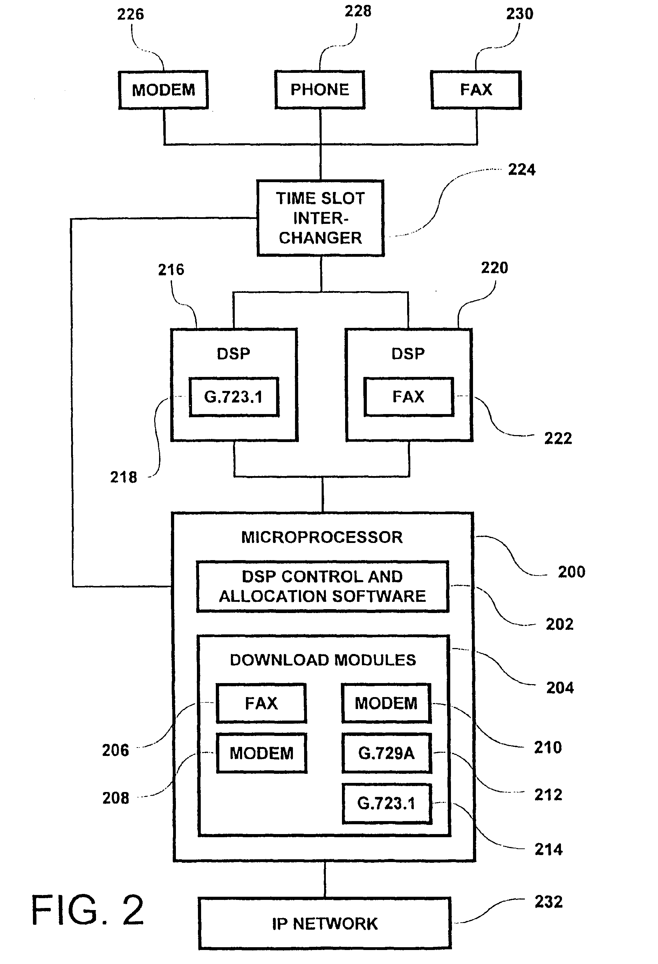

Referring to **Fig. 2****,** a single-function, multi-channel DSP system architecture according to an embodiment of the present invention is illustrated. The single-function, multi-channel system allows only a single function to be run on all channels in a DSP, thereby reducing the resource requirements per DSP. A microprocessor **200** includes DSP control and allocation software **202** (hereinafter referred to as "control software") and download modules **204.** Download modules **204** include a fax module **206,** modem modules **208, 210,** a G.729A voice compression/decompression module **212,** and a G.723.1 voice compression/decompression module **214.** In this embodiment, the download modules **204** include two modem modules **208** and **210,** each of the modem modules for handling different protocols. Generally speaking, the download modules **204** can include software modules to handle any telecommunication protocols known in the art or that is developed in the future.

As illustrated, a first DSP **216** is running a G.723.1 voice compression/decompression module **216** that it has downloaded. The first DSP **216** is running one function only (i.e., compression/decompression of voice signals) on all of the channels in the first DSP **216.** If the first DSP **216** has four channels, then all four channels are handling voice compression/decompression. Similarly, a second DSP **220** is running a fax module **222** that it has downloaded. The second DSP **220** is running one function only (i.e., fax traffic handling) on all of the channels in the second DSP **220.** However many channels the second DSP **220** contains, all of those channels are operating to handle fax communications.

Control software **202** controls which functions are run on which DSPs. Control software **202** also controls the time slots for transmitting the telecommunication information. Using single-function, multi-channel DSPs allows the system to create a pool of specialized resources.

A call coming into the universal port would start off as a voice call. That is, control software **202** would route the call to a DSP that is running voice processing software. If the mode of the phone call were to change at any time, control software **202** would switch the call to another DSP that has the appropriate software loaded to process that function. This switching operation is accomplished by one of two methods. One method of switching requires control software **202** to re-route time slots to a particular DSP. The other method is to broadcast all timeslots to all DSPs. Control software **202** then controls the DSP timeslot selection based on the function needed.

In operation, information flowing to and from physical devices, such as a modem **226,** a telephone **228,** and a fax machine **230,** pass through a time slot interchanger **224** to the individual DSPs (**216** and **220**) for processing. The time slot interchanger **224** determines the time slots for each individual physical device. The time slot interchanger **224** can operate in a similar manner as TDM input **124** in Fig. 1 by assigning each physical device a time slot regardless of whether the physical device is in use or not. Alternatively, as in the preferred method discussed above, the time slot interchanger **224** assigns time slots based on need. The time slot interchanger **224** control interface is connected to a microprocessor **200.**

The DSP control software **202** determines the time slots for the physical devices and determines which function each of the DSPs will operate to process with every channel in each DSP running the same downloaded module. As illustrated, a first DSP **216** is running a module **212** to handle G.729A voice compression/decompression on all of the channels in that DSP **216.** Similarly, a second DSP **220** is running a module **222** to handle fax traffic on all of the channels of that DSP **206.** The processed information is sent to and received from, in packets, an Internet Protocol (IP) network **232** (i.e., a WAN or LAN type of IP network).

An advantage of this type of system is that as the number of channels becomes larger, the tradeoff of restricting processing to be functionally organized becomes viable because the probability of using all the available processing power increases with the call volume.

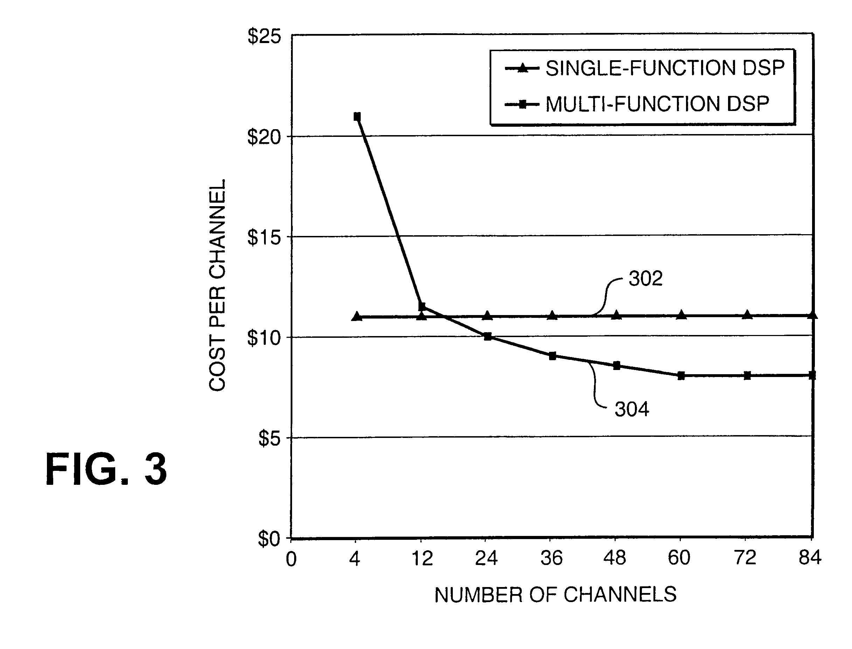

Referring to **Fig. 3****,** a cost analysis chart for the two different approaches is illustrated. The chart illustrates the cost curve **302** for a multi-function DSP as compared to the cost curve **304** for a single-function DSP. The analysis represented by this chart assumes that there are only three functions of which only one fits into a given DSP's internal memory, and that the DSPs are only capable of 4 channels of processing. The chart illustrates the cost per channel as a function of the number of channels. At a lower channel count (roughly, less than 15 channels), the cost for a single-function, multi-channel DSP is more expensive than the multi-function, multi-channel DSP. However, as the number of channels increases (above about 15 channels) the single-function, multi-channel DSP becomes more cost effective. Thus, when a large number of channels are being used, the single-function, multi-channel DSP is a superior choice.

The present invention has been described for a gateway for allowing telecommunication information from a TDM system to be transmitted over a packet based network over a telephone line, and for receiving packet data from the packet based network to be transported by the TDM system.

Although the present invention has been described in terms of preferred embodiments, it will be appreciated by those of skill in the art that numerous modifications and variations may be made to the invention as described without departing from the scope of the invention. The scope of the present invention is limited only by the appended claims.

## Claims

1. A telecommunications gateway for interfacing telecommunications traffic, the traffic comprising a plurality of signaling protocols, between a Time Division Multiplexed TDM network and a packet switched network (232), the telecommunications gateway comprising:
a time slot interchanger (224) connected to the TDM network for handling traffic from the TDM network;
a plurality of digital signal processors DSPs (216, 220) connected to the time slot interchanger for handling TDM traffic routed according to allocation of time slots by the time slot interchanger and for converting TDM traffic into packets for transport via the packet switched network (232) and converting packet traffic from the packet switched network for transport via the TDM network; and
a microprocessor (200) operating according to software instructions to control time slot allocation by the time slot interchanger (224) and to control operation of the DSPs (216, 220);
wherein the microprocessor (200) is adapted to download a respective software module (206, 208, 210, 212, 214) to each of the plurality of DSPs (216, 220) to enable the DSPs to each handle telecommunications traffic according to one of the plurality of different signaling protocols, all channels of each of the plurality of DSPs handling only telecommunications traffic corresponding to a single one of the plurality of different signaling protocols, and **characterised in that**
the allocation of time slots by the time slot interchanger (224) includes reallocating a call to a different one of the plurality of DSPs (216, 220) by re-routing the time slot assigned to that call.

2. A method of interfacing telecommunications traffic, the traffic comprising a plurality of different signaling protocols, between a Time Division multiplexed TDM network and a packet switched network (232), the method comprising:
allocating TDM traffic to and from each of a plurality of digital signal processors DSPs (216, 220) by assigning time slots; and
downloading a respective software module (206, 208, 210, 212, 214) to each of the plurality of DSPs (216, 220) to enable the DSPs to each handle the telecommunications traffic according to one of the plurality of different signaling protocols;
wherein all channels of each of the plurality of DSPs (216, 220) handles only telecommunications traffic corresponding to a single one of the plurality of different signaling protocols; and **characterized in that**
the act of allocating TDM traffic includes reallocating a call to a different one of the plurality of DSPs (216, 220) by re-routing the time slot assigned to said call.

## Patentansprüche

1. Ein Telekommunikations-Gateway als Schnittstelle für Telekommunikations-Verkehr, wobei der Verkehr eine Mehrzahl von Signal-Protokollen enthält, zwischen einem Zeitteilungsmultiplex-TDM-Netzwerk und einem Paketvermittlungs-Netzwerk (232), wobei das Telekommunikations-Gateway enthält:
einen Zeitschlitz-Austauscher (224), der mit dem TDM-Netzwerk verbunden ist, um Verkehr aus dem TDM-Netzwerk zu regeln;
eine Mehrzahl von digitalen Signalprozessoren DSPs (216, 220), verbunden mit dem Zeitschlitz-Austauscher, zur Regelung des TDM-Verkehrs, der geleitet wird entsprechend der Zuordnung von Zeitschlitzen vom Zeitschlitz-Austauscher, und zum Umwandeln von TDM-Verkehr in Pakete für den Transport über das Paketvermittlungs-Netzwerk (232) und zum Umwandeln von Paket-Verkehr aus dem Paketvermittlungs-Netzwerk für den Transport über das TDM-Netzwerk; und
einen Mikroprozessor (200), der gemäß Softwarebefehlen arbeitet, um die Zeitschlitz-Zuteilung durch den Zeitschlitz-Austauscher (224) zu steuern und um die Arbeit der DSPs (216, 220) zu steuern;
wobei der Mikroprozessor (200) angepasst ist, ein entsprechendes Software-Modul (206, 208, 210, 212, 214) in jeden DSP aus der Mehrzahl von DSPs (216, 220) zu laden, um die DSPs zu befähigen, jeweils Telekommunikations-Verkehr entsprechend einem Signal-Protokoll aus der Mehrzahl von verschiedenen Signal-Protokollen zu regeln, wobei alle Kanäle von jedem DSP aus der Mehrzahl von DSPs nur Telekommunikations-Verkehr regeln, der einem einzigen Signal-Protokoll aus der Mehrzahl von verschiedenen Signal-Protokollen entspricht, und **dadurch gekennzeichnet ist, dass**
das Zuteilen von Zeitschlitzen durch den Zeitschlitz-Austauscher (224) Neuzuteilung eines Anrufs an einen anderen DSP aus der Mehrzahl von DSPs (216, 220) durch Umleiten des Zeitschlitzes, der dem Anruf zugeordnet ist, enthält.

2. Ein Verfahren als Schnittstelle für Telekommunikations-Verkehr, wobei der Verkehr eine Mehrzahl von verschiedenen Signal-Protokollen enthält, zwischen einem Zeitteilungsmultiplex-Netzwerk TDM und einem Paketvermittlungs-Netzwerk (232), wobei das Verfahren enthält:
Zuteilen von TDM-Verkehr an einen und von einem jeweiligen DSP aus einer Mehrzahl von digitalen Signalprozessoren DSPs (216, 220) durch Zuweisen von Zeitschlitzen; und
Laden eines entsprechenden Softwaremoduls (206, 208, 210, 212, 214) in jeden der DSPs aus der Mehrzahl von DSPs (216, 220), um die DSPs zu befähigen, je den Telekommunikations-Verkehr zu regeln, der einem Signal-Protokoll aus der Mehrzahl von verschiedenen Signal-Protokollen entspricht;
wobei jeder der Kanäle von jedem DSP aus der Mehrzahl von DSPs (216, 220) nur Telekommunikations-Verkehr regelt, der einem einzigen Signal-Protokoll aus der Mehrzahl von verschiedenen Signal-Protokollen entspricht, und **dadurch gekennzeichnet, dass**
das Zuteilen von TDM-Verkehr Neuzuteilung eines Anrufs an einen anderen DSP aus der Mehrzahl von DSPs (216, 220) durch Umleiten des Zeitschlitzes, der dem genannten Anruf zugeordnet ist, enthält.

## Revendications

1. Passerelle de télécommunications assurant l'interface d'un trafic de télécommunications, lequel trafic comprend plusieurs protocoles de signalisation entre un réseau multiplexé à division dans le temps TDM et un réseau commuté par paquets (232), laquelle passerelle de télécommunication comprend :
- un interchangeur de créneaux temporels (224) connecté au réseau TDM afin de gérer le trafic du réseau TDM ;
- plusieurs processeurs de signaux numériques DSP (216, 220) connectés à l'interchangeur de créneaux temporels afin de gérer le trafic TDM routé selon une attribution de créneaux temporels par l'interchangeur de créneaux temporels, et afin de convertir le trafic TDM en paquets en vue du transport par le réseau commuté par paquets (232) et de convertir le trafic par paquets du réseau commuté par paquets en vue du transport par le réseau TDM ; et
- un microprocesseur (200) fonctionnant selon des instructions logicielles afin de commander une attribution de créneaux temporels par l'interchangeur de créneaux temporels (224), et de commander le fonctionnement des DSP (216, 220) ;
dans lequel le microprocesseur (200) est conçu pour télécharger un module logiciel respectif (206, 208, 210, 212, 214) pour chacun desdits plusieurs DSP (216, 220) afin de permettre aux DSP de gérer chacun un trafic de télécommunication en fonction de l'un desdits plusieurs protocoles de signalisation différents, tous les canaux de chacun desdits plusieurs DSP gérant uniquement un trafic de télécommunications correspondant à un desdits plusieurs protocoles de signalisation différents, et **caractérisé en ce que** l'attribution de créneaux temporels par l'interchangeur de créneaux temporels (224) comprend la réattribution d'un appel à un DSP différent parmi lesdits plusieurs DSP (216, 220) en re-routant le créneau temporel attribué à l'appel.

2. Procédé assurant l'interface d'un trafic de télécommunications, lequel trafic comprend plusieurs protocoles différents de signalisation entre un réseau multiplexé à division dans le temps TDM et un réseau commuté par paquets (232), lequel procédé comprend les étapes consistant à :
- attribuer un trafic TDM vers et depuis chacun desdits plusieurs processeurs de signaux numériques DSP (216, 220) en attribuant des créneaux temporels ; et
- télécharger un module logiciel respectif (206, 208, 210, 212, 214) pour chacun desdits plusieurs DSP (216, 220) afin de permettre aux DSP de gérer chacun un trafic de télécommunication en fonction de l'un desdits plusieurs protocoles de signalisation différents ;
dans lequel tous les canaux de chacun desdits plusieurs DSP gèrent uniquement un trafic de télécommunications correspondant à un seul desdits plusieurs protocoles de signalisation différents, et **caractérisé en ce que** le fait d'attribuer un trafic TDM comprend la réattribution un appel à un DSP différent parmi lesdits plusieurs DSP (216, 220) en re-routant le créneau temporel attribué au dit appel.
